# EUROPÄISCHE PATENTSCHRIFT

(11) **EP 1 037 526 B1**
(45) Veröffentlichungstag und Bekanntmachung des Hinweises auf die Patenterteilung: **28.11.2001**
(21) Anmeldenummer: 99957885.9
(22) Anmeldetag: 11.10.1999
(51) Int. Cl.: A01K 61/00, A01K 63/04

(54) **BECKEN ZUR FISCHAUFZUCHT ODER INTENSIVMAST VON FISCHEN**
BASIN FOR FISH REARING OR FOR THE INTENSIVE FEEDING OF FISH
BASSIN POUR L'ELEVAGE OU L'ENGRAISSAGE INTENSIF DE POISSONS

(30) Priorität: 13.10.1998 DE 19847027
(43) Veröffentlichungstag der Anmeldung: 27.09.2000
(73) Patentinhaber: United Food Engineering GmbH, 69469 Weinheim (DE)
(72) Erfinder: HARTUNG, Christoph, D-69469 Weinheim (DE); STEINBACH, Peter, D-67169 Kallstadt (DE)
(74) Vertreter: Meyer-Roedern, Giso, Dr.
(86) Internationale Anmeldenummer: DE9903270
(87) Internationale Veröffentlichungsnummer: WO0021360

(56) Entgegenhaltungen:
- EP-A- 0 498 397
- DE-A- 3 827 713
- US-A- 5 160 620

## Beschreibung

Die Erfindung betrifft ein Becken zur Fischaufzucht oder Intensivmast von Fischen mit einem Wasseraufbereitungsschacht, in dem sich ein überfluteter Festbettreaktor zur mikrobiologischen Wasseraufbereitung und ein mit Abstand vom Schachtboden darunter angeordnetes, von unten angeströmtes Begasungsteil befinden, durch das sauerstoffhaltiges Gas zugeführt und das mit Sauerstoff angereicherte Wasser nach dem Mammut-Pumpeneffekt in aufsteigender Strömung durch den Festbettreaktor gefördert wird.

Aus der DE 36 19 757 A1 ist ein Becken zu Intensiv-Fischmast bekannt, bei dem als Begasungsteil Schläuche am Boden des Wasseraufbereitungsschachts angeordnet sind.

Beim Betrieb dieses Fischbeckens hat sich herausgestellt, daß Feststoffe, nämlich Fischfutter, Ausscheidungen der Fische und sich aus dem Festbettreaktor lösender Biorasen, zwischen und unter die Schläuche sedimentieren und zu Betriebsstörungen aufgrund von Faulprozessen führen.

Dem abzuhelfen, wurde bei dem in der DE 38 27 713 A1 beschriebenen Fischbecken der eingangs genannten Art das Begasungsteil mit Abstand von dem Schachtboden angeordnet und der Schachtbereich darunter als Denitrifikations- und Sedimentationszone ausgebildet. Um die hier sedimentierenden Feststoffe abzuführen, bedarf es eines Schlammräumers. Dieser ist als mechanisch bewegtes Teil recht aufwendig und störanfällig.

Aufgabe der Erfindung ist es, ein Fischbecken der eingangs genannten Art zu schaffen, das unterhalb des Festbettreaktors keines Schlammräumers bedarf.

Zur Lösung dieser Aufgabe sind bei einem derartigen Fischbecken der Abstand des Begasungsteils von dem Schachtboden und die Strömungsführung und Strömungsgeschwindigkeit des Wassers unterhalb des Begasungsteils so ausgelegt, daß hier keine Sedimentation von Feststoffen stattfindet.

Bei einer bevorzugten Ausführungsform hat der Festbettreaktor wassereintrittsseitig eine Frontblende, die vor das Begasungsteil herabreicht.

Bei einer bevorzugten Ausführungsform ist der Schachtboden vor der Blende abgeschrägt oder gerundet.

Bei einer bevorzugten Ausführungsform ist das Becken auf einen Fischbesatz ausgelegt, bei dem eine Sedimentation von Feststoffen im Aufenthaltsbereich der Fische durch deren Schwimmbewegung verhindert wird. In dem Fischbecken findet also überhaupt keine Sedimentation von Feststoffen statt.

Bei einer bevorzugten Ausführungsform ist eine beckenexterne Wasserreinigung durch wenigstens ein eine mechanische Feststoffabscheidung bewirkendes Filter oder Mikrosieb vorgesehen. Gegenüber der aus der DE 36 19 757 A1 bekannten Wasserreinigung durch Sedimentation in einem fischbeckenexternen Absetzbecken zeichnet sich ein Filter oder Mikrosieb durch einen kompakten Aufbau und niedrige Gestehungs- und laufende Betriebskosten aus. Eine bemerkenswerte Besonderheit des erfindungsgemäßen Fischbeckens ist darin zu sehen, daß es keiner Wasserreinigung durch Sedimentation bedarf, Sedimentation also weder beckenintern, noch beckenextern vorgesehen ist.

Bei einer bevorzugten Ausführungsform ist in dem Vorlauf des Filters oder Mikrosiebs eine Pumpe, vorzugsweise Mammutpumpe angeordnet. Letztere hat keine mechanisch bewegten Teile und ist entsprechend störunanfällig.

Bei einer bevorzugten Ausführungsform ist oberhalb des Wasseraufbereitungsschachts ein Abschäumer angeordnet. Dieser dient dazu, hier auftretenden Schaum zu entfernen und dadurch die Wasserqualität zu verbessern. Die Verwendung eines Abschäumers hat den Vorteil, daß auch kolloidale Stoffe entfernt werden können, wodurch die mikrobiologische Wasseraufbereitungsstufe entlastet wird.

Bei einer bevorzugten Ausführungsform findet eine beckeninterne Wasseraufbereitung durch UV-Bestrahlung statt. Diese wirkt keimtötend. Die fischbeckeninterne Anordnung der UV-Bestrahlungseinheit zeichnet sich durch einen geringen baulichen Aufwand aus.

Das erfindungsgemäße Fischbecken kann für sich allein betrieben werden. Doch kann man auch mehrere Becken zu einer Anlage zur Fischaufzucht oder Intensivmast von Fischen kombinieren, bei der vorzugsweise ein gemeinsamer Wasserkreislauf über alle Becken und das Filter oder Mikrosieb führt.

Bei einer bevorzugten Ausführungsform befindet sich der Wasseraufbereitungsschacht am einen Ende und ein Ablauf hin zu dem Wasseraufbereitungsschacht des nächstfolgenden Beckens am anderen Ende der Becken.

Die Erfindung wird im folgenden anhand eines in der Zeichnung dargestellten Ausführungsbeispiels näher erläutert. Es zeigen:
- Fig. 1: einen Längsschnitt durch ein Fischbecken; und
- Fig. 2: die Draufsicht auf eine Anlage mit acht derartigen Fischbecken.

Das Fischbecken 10 ist von rechteckigem Grundriß. Es hat an der einen Schmalseite einen Wasseraufbereitungsschacht 12, dessen Boden 14 gegenüber dem 16 des Fischbeckens 10 vertieft ist. In dem Wasseraufbereitungsschacht 12 ist ein überfluteter Festbettreaktor 18 zur mikrobiologischen Wasseraufbereitung angeordnet, der annähernd die volle Breite des Fischbeckens 10 einnimmt.

Unterhalb des Festbettreaktors 18 befindet sich ein Begasungsteil 20, durch das sauerstoffhaltiges Gas zugeführt und das mit Sauerstoff angereicherte Wasser nach dem Mammut-Pumpeneffekt in aufsteigender Strömung durch den Festbettreaktor 18 gefördert wird.

Der Festbettreaktor 18 wird vom Rand des Beckens 10 her angeströmt. Hier ist vor dem Festbettreaktor 18 eine Fallströmungszone 22 abgeteilt, deren Außenwand 24 mit einer Abschrägung oder Rundung 26 in den Boden 14 des Wasseraufbereitungsschachts 12 übergeht. Das Begasungsteil 20 ist in wohldefiniertem Abstand vom Boden 14 des Wasseraufbereitungsschachts 12 angeordnet. Es wird von unten angeströmt. Strömungsführung und Strömungsgeschwindigkeit des Wassers sind dabei so ausgelegt, daß unterhalb des Begasungsteils 20 keine Sedimentation von Feststoffen stattfindet.

Der Festbettreaktor 18 hat wassereintrittsseitig eine Frontblende 48, die vor das Begasungsteil 20 herabreicht. Der Schachtboden 14 vor der Blende 48 ist in einen 90°-Kreisbogen 26 gerundet.

Das aufbereitete Wasser tritt mit im wesentlichen horizontaler Strömung oben aus dem Festbettreaktor 18 aus, und es durchströmt den Aufenthaltsbereich 28 der Fische. Am anderen Ende des Beckens 10 befindet sich ein Anbauschacht 46, in den das Wasser durch eine vergitterte Öffnung 42 im Bodenbereich des Beckens 10 eintritt. Das Wasser wird mit einer Mammutpumpe 30, deren Ansaugstutzen 32 in den Anbauschacht 46 hineinragt, durch ein beckenexternes Filter 34 zurück in die Fallströmungszone 22 vor dem Festbettreaktor 18 gefördert. Hier befindet sich eine beckeninterne UV-Bestrahlungsstation 36.

Oberhalb des Wasseraufbereitungsschachts 12 befindet sich ein Abschäumer 38, mit dem hier auftretender Schaum entfernt wird.

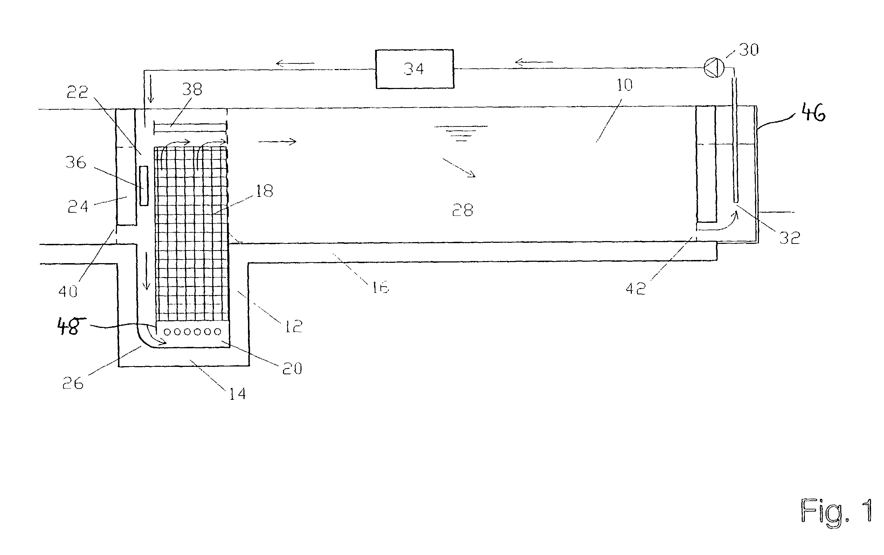

Bei dem vorstehend beschriebenen Betrieb eines einzelnen Fischbeckens 10 ist die in Fig. 1 links gezeigte Öffnung 40 nicht vorhanden.

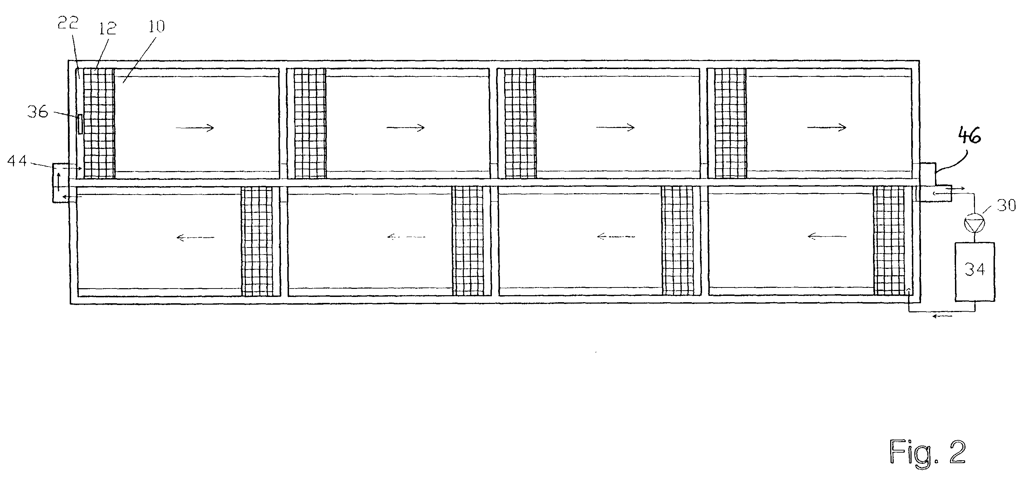

Bei der in Fig. 2 gezeigten Anlage sind in zwei Reihen neben- und hintereinander acht baugleiche Fischbecken 10 der beschriebenen Art angeordnet. Die Wasseraufbereitungsschächte 12 befinden sich in einer jeden Reihe an denselben, von Reihe zu Reihe aber an entgegengesetzten Enden der Fischbecken 10. Das Wasser wird in einem gemeinsamen Kreislauf über alle Becken 10 zirkuliert. Es gelangt von dem stromab liegenden Ende eines Beckens in die Fallströmungszone 22 vor dem Festbettreaktor 18 des nächstfolgenden Beckens. Der Wasserübertritt erfolgt an einer beckenbreiten vergitterten Öffnung 40 auf Höhe des Beckenbodens 16 (vgl. Fig. 1 links).

An dem einen stirnseitigen Übergang zwischen den beiden Reihen von Fischbecken 10 befindet sich ein Anbauschacht 46, in den das Wasser durch eine vergitterte Öffnung 42 im Bodenbereich des letzten Beckens 10 der einen Reihe eintritt. Das Wasser wird mit einer Mammutpumpe 30 aus dem Anbauschacht 46 gefördert. Es durchströmt ein fischbeckenexternes Filter 34 und gelangt in die Fallströmungszone 22 vor dem Festbettreaktor 18 des ersten Beckens 10 der anderen Reihe.

An dem anderen stirnseitigen Übergang zwischen den beiden Reihen von Fischbecken 10 ist für dieselbe Strömungsführung des Wassers ein Anbauschacht 44 vorgesehen. In der Fallströmungszone 22 vor dem Festbettreaktor 18 des ersten Beckens 10 der Reihe, in die das Wasser eintritt, befindet sich eine beckeninterne UV-Bestrahlungsstation 36.

Der gemeinsame Wasserkreislauf über die Fischbecken 10 und das Filter 34 wird durch die Mammutpumpe 30 und den Mammut-Pumpeneffekt in den Wasseraufbereitungsschächten 12 aufrechterhalten.

### Liste der Bezugszeichen

- 10: Fischbecken
- 12: Wasseraufbereitungsschacht
- 14: Schachtboden
- 16: Beckenboden
- 18: Festbettreaktor
- 20: Begasungsteil 1
- 22: Fallströmungszone
- 24: Außenwand
- 26: Rundung
- 28: Aufenthaltsbereich
- 30: Mammutpumpe
- 32: Ansaugstutzen
- 34: Filter
- 36: UV-Bestrahlungseinheit
- 38: Abschäumer
- 40: Öffnung
- 42: Öffnung
- 44: Anbauschacht
- 46: Anbauschacht
- 48: Frontblende

## Patentansprüche

1. Becken zur Fischaufzucht oder Intensivmast von Fischen mit einem Wasseraufbereitungsschacht, in dem sich ein überfluteter Festbettreaktor zur mikrobiologischen Wasseraufbereitung und ein mit Abstand vom Schachtboden darunter angeordnetes, von unten angeströmtes Begasungsteil befinden, durch das sauerstoffhaltiges Gas zugeführt und das mit Sauerstoff angereicherte Wasser nach dem Mammut-Pumpeneffekt in aufsteigender Strömung durch den Festbettreaktor gefördert wird, **dadurch gekennzeichnet, daß** der Abstand des Begasungsteils (20) von dem Schachtboden (14) und die Strömungsführung (26) und Strömungsgeschwindigkeit des Wassers unterhalb des Begasungsteils (20) so ausgelegt sind, daß hier keine Sedimentation von Feststoffen stattfindet.

2. Becken nach Anspruch 1, **dadurch gekennzeichnet, daß** der Festbettreaktor (18) wassereintrittsseitig eine Frontblende (48) hat, die vor das Begasungsteil (20) herabreicht.

3. Becken nach Anspruch 2, **dadurch gekennzeichnet, daß** der Schachtboden (14) vor der Blende (48) abgeschrägt oder gerundet ist.

4. Becken nach einem der Ansprüche 1 bis 3, **dadurch gekennzeichnet, daß** es auf einen Fischbesatz ausgelegt ist, bei dem eine Sedimentation von Feststoffen im Aufenthaltsbereich (28) der Fische durch deren Schwimmbewegung verhindert wird.

5. Becken nach einem der Ansprüche 1 bis 4, **gekennzeichnet durch** eine beckenexterne Wasserreinigung **durch** wenigstens ein eine mechanische Feststoffabscheidung bewirkendes Filter (34) oder Mikrosieb.

6. Becken nach Anspruch 5, **dadurch gekennzeichnet, daß** in dem Vorlauf des Filters (34) oder Mikrosiebs eine Pumpe, vorzugsweise Mammutpumpe (30) angeordnet ist.

7. Becken nach einem der Ansprüche 1 bis 6, **dadurch gekennzeichnet, daß** oberhalb des Wasseraufbereitungsschachts (12) ein Abschäumer (38) angeordnet ist.

8. Becken nach einem der Ansprüche 1 bis 7, **gekennzeichnet durch** eine beckeninterne Wasseraufbereitung **durch** UV-Bestrahlung (36).

9. Anlage zur Fischaufzucht oder Intensivmast von Fischen mit mehreren Becken (10) nach einem der Ansprüche 1 bis 8, bei der ein gemeinsamer Wasserkreislauf über alle Becken (10) und das Filter (34) oder Mikrosieb führt.

10. Anlage nach Anspruch 9, **dadurch gekennzeichnet, daß** sich der Wasseraufbereitungsschacht (12) am einen Ende und ein Ablauf hin zu dem Wasseraufbereitungsschacht (12) des nächstfolgenden Beckens (10) am anderen Ende der Becken (10) befindet.

## Claims

1. Basin for fish rearing or for the intensive feeding of fish, with a water treatment shaft in which a submerged fixed bed reactor is located for microbiological water treatment, and an aeration part is arranged below it at a distance from the shaft bottom, through which gas containing oxygen is fed in, and the water, enriched with oxygen, is transported through the fixed bed reactor in an upwelling flow, in accordance with the mammoth pump effect, **characterized in that** the distance between the aeration part (20) and the shaft bottom (14), as well as the flow guide (26) and flow rate of the water below the aeration part (20), are designed in such a way that no sedimentation of solids occurs here.

2. Basin according to Claim 1, **characterized in that** the fixed bed reactor (18) has a front baffle (48) that reaches to in front of the aeration part (20), on the water inlet side.

3. Basin according to Claim 2, **characterized in that** the shaft bottom (14) is slanted or rounded in front of the baffle (48).

4. Basin according to one of Claims 1 to 3, **characterized in that** the basin is designed for occupation by fish in such a way that sedimentation of solids in the area (28) in which the fish stay is prevented by their swimming movements.

5. Basin according to one of Claims 1 to 4, **characterized in that** water purification outside the basin is provided by at least one filter (34) or microscreen that results in mechanical removal of solids.

6. Basin according to Claim 5, **characterized in that** a pump, preferably a mammoth pump (30), is arranged ahead of the filter (34) or microscreen.

7. Basin according to one of Claims 1 to 6, **characterized in that** a foam skimmer (38) is arranged above the water treatment shaft (12).

8. Basin according to one of Claims 1 to 7, **characterized by** water treatment inside the basin, by means of UV radiation (36).

9. System for fish rearing or for the intensive feeding of fish, with several basins (10) according to one of Claims 1 to 8, with a common water circulation passing over all the basins (10) and the filter (34) or microscreen.

10. System according to Claim 9, **characterized in that** the water treatment shaft (12) is at one end of the basins (10) and a drain to the water treatment shaft (12) of the next basin (10) is at the other end of the basins (10).

## Revendications

1. Bassin pour la pisciculture ou l'engraissement intensif de poissons, comportant un puits de traitement de l'eau dans lequel se trouvent un réacteur à lit fixe submergé pour le traitement microbiologique de l'eau ainsi qu'une partie de gazage alimentée à partir du bas et disposée à distance au-dessous du fond du puits, par laquelle le gaz contenant de l'oxygène est amené et l'eau enrichie en oxygène est transportée en un courant ascendant, à travers le réacteur à lit fixe, sous l'effet de pompe mammouth, **caractérisé en ce que** la distance entre la partie de gazage (20) d'une part, et le fond (14) du puits et le guidage d'écoulement (26) d'autre part, ainsi que la vitesse d'écoulement de l'eau au-dessous de la partie de gazage (20), sont dimensionnées de manière qu'aucune sédimentation de matière solide n'ait lieu ici.

2. Bassin selon la revendication 1, **caractérisé en ce que** le réacteur à lit fixe (18) possède, du côté de l'entrée de l'eau, un panneau frontal (48) qui descend devant la partie de gazage (20).

3. Bassin selon la revendication 2, **caractérisé en ce que** le fond (14) du puits est chanfreiné ou arrondi devant le panneau (48).

4. Bassin selon l'une des revendications 1 à 3, **caractérisé en ce qu'**il est dimensionné pour un nombre de poissons pour lequel une sédimentation de matières solides dans la zone de séjour (28) des poissons est empêchée par leurs mouvements natatoires.

5. Bassin selon l'une des revendications 1 à 4, **caractérisé par** une épuration d'eau externe au bassin au moyen d'au moins un filtre (34) ou micro-tamis provoquant une séparation mécanique des matières solides.

6. Bassin selon la revendication 5, **caractérisé en ce qu'**une pompe, de préférence une pompe mammouth (30), est disposée dans la conduite en amont du filtre (34) ou micro-tamis.

7. Bassin selon l'une des revendications 1 à 6, **caractérisé en ce qu'**un écrémeur (38) est disposé au-dessus du puits de traitement d'eau (12).

8. Bassin selon l'une des revendications 1 à 7, **caractérisé par** un traitement de l'eau interne au bassin par rayonnement UV (36).

9. Installation pour pisciculture ou engraissement intensif de poissons comportant plusieurs bassins (10) selon l'une des revendications 1 à 8, dans laquelle un circuit d'eau commun passe par tous les bassins (10) et le filtre (34) ou micro-tamis.

10. Installation selon la revendication 9, **caractérisée en ce que** le puits de traitement d'eau (12) se trouve à une extrémité, et une sortie vers le puits de traitement d'eau (12) du bassin (10) suivant se trouve à l'autre extrémité des bassins (10).
